Europäisches Patentamt

European Patent Office

Office européen des brevets

(19)

(11)  **EP 1 630 573 A2**

(12)  **EUROPÄISCHE PATENTANMELDUNG**

(43) Veröffentlichungstag:
01.03.2006  Patentblatt 2006/09

(51) Int Cl.:
*G01S 17/89* $^{(2006.01)}$

(21) Anmeldenummer: 05025026.5

(22) Anmeldetag: 31.03.1998

(84) Benannte Vertragsstaaten:
BE DE DK FR GB IT

(30) Priorität: 25.06.1997  DE 19726917

(62) Dokumentnummer(n) der früheren Anmeldung(en) nach Art. 76 EPÜ:
98105831.6 / 0 887 660

(71) Anmelder: CLAAS Selbstfahrende Erntemaschinen GmbH
33428 Harsewinkel (DE)

(72) Erfinder:
• Diekhans, Norbert, Dr.
33335 Gütersloh (DE)
• Huster, Jochen
33330 Gütersloh (DE)

Bemerkungen:
Diese Anmeldung ist am 16 - 11 - 2005 als Teilanmeldung zu der unter INID-Kode 62 erwähnten Anmeldung eingereicht worden.

(54)  **Vorrichtung an Landmaschinen zur berührungslosen Abtastung von sich über dem Boden erstreckenden Konturen**

(57)  Gegenstand der Erfindung ist eine Vorrichtung an fahrbaren Landmaschinen zur berührungslosen Abtastung von sich Ober dem Boden erstreckenden Konturen, beispielsweise die Kontur eines Emtegutschwades. Dabei wird eine Laserentfernungsmeß-Vorrichtung bestehend aus einer an sich bekannten Laserstrahlsende-/-empfangseinrichtung verwendet, die aus der Laufzeitmessung des ausgesandten und an einem Konturpunkt reflektierten Laser-Abtaststrahles die Entfernung zu diesem bestimmt. Die Laser-Abtaststrahlen werden in einem bestimmten Winkelbereich schrittweise oder stufenlos in einer Abtaststrahlen-Ebene verschwenkt. Dabei ist die Laserentfemungsmeß-Vorrichtung so an der Landmaschine ausgerichtet angebracht ist, daß die Abtaststrahlen-Ebene in einem spitzen Winkel in Fahrtrichtung nach vom zum Boden geneigt ist. Mittels einer Auswerteeinrichtung, die zu jedem Schwenkwinkel aus der gemessenen Entfernung, der Anordnung und Ausrichtung der Laserentfernungsmeß-Vorrichtung an der Landmaschine (Anbringungsort, Anbringungshöhe, Neigungswinkel zum Boden) die zu dem Schwenkwinkel korrespondierende Lage des Konturpunktes ermittelt.

Fig.1

EP 1 630 573 A2

Printed by Jouve, 75001 PARIS (FR)

**Beschreibung**

Die Erfindung bezieht sich auf eine Vorrichtung an Landmaschinen zur berührungslosen Abtastung von sich über dem Boden erstreckenden Konturen.

Eine derartige Vorrichtung ist aus dem Aufsatz "Schwadabtastung mit Ultraschall" (Zeitschrift: Landtechnik 5-93, Seite 266-268) bekannt. Die dort beschriebene Vorrichtung besteht aus mehreren auf einer Befestigungsleiste im Abstand von 40 cm zueinander angeordneten Ultraschallsensoren, die senkrecht auf den Boden gerichtet sind. Diese Befestigungsleiste wird zum Beispiel an einem Feldhäcksler oder an einem eine Ballenpresse ziehenden Traktor montiert. Mit Hilfe der Ultraschallsensoren kann die Höhe beispielsweise eines Stroh- oder Grünfutterschwades über dem Boden an bestimmten Punkten ermittelt werden, wodurch die Kontur des Schwades über dem Boden entlang einer horizontalen Linie abgetastet wird. Die dort beschriebene Vorrichtung hat jedoch einige Nachteile.

Die bekannte Abtastvorrichtung ist relativ teuer, da für die Abtastung mehrere Ultraschallsensoren notwendig sind.

Darüber hinaus besteht ein wesentlicher Nachteil darin, daß der Abstand der Ultraschallsensoren zueinander auf der Befestigungsleiste einen Mindestabstand nicht unterschreiten darf, da es ansonsten zu einer störenden, gegenseitigen Beeinflussung der Ultraschallsensoren aufgrund der unzureichenden Fokussierung der Schallkeulen kommt. Dies beschränkt jedoch die horizontale Auflösung (Dichte der Meßpunkte) der Konturabtastung. Darüber hinaus darf auch der Abstand der Ultraschallsensoren über dem Boden bzw. über der abzutastenden Kontur nicht zu groß werden (nicht größer als ca. 1,2 m), da es wegen der relativ großen Divergenz der Schallkeulen ebenfalls zu einer störenden, gegenseitigen Beeinflussung der Ultraschallsensoren kommt.

Eine derart niedrige Anbringungshöhe an der Landmaschine ist oftmals schon aus konstruktiven Gründen nur schwierig zu realisieren. Außerdem wird eine derart sperrige und in niedriger Höhe angebrachte Befestigungsleiste mit mehreren Ultraschallsensoren im Feldeinsatz sehr leicht beschädigt. Die Anbringungshöhe der Befestigungsleiste zu vergrößern ist jedoch nur möglich, wenn der Abstand der Ultraschallsensoren zueinander auf der Befestigungsleiste ebenfalls vergrößert wird, was wiederum eine geringere horizontale Auflösung (Quer zur Fahrtrichtung) der Schwad-Konturabtastung bedeutet.

Der Versuch den Mindestabstand der Ultraschallsensoren zueinander dadurch zu verringern, daß diese nicht gleichzeitig arbeiten, sondern benachbarte Sensoren abwechselnd messen, erfordert eine aufwendige Ansteuerschaltung für die einzelnen Ultraschallsensoren.

Für eine vorausschauende Konturabtastung wie sie beispielsweise für eine automatische Lenkung entlang der abgetasteten Schwadkontur notwendig wäre, müßte die Befestigungsleiste mit den Ultraschallsensoren in aufwendiger und umständlicher Weise an ein frontseitig an der Landmaschine angeordnetes und nach vom verlängertes zusätzliches Haltegestänge montiert werden.

Ein weiterer Nachteil der bekannten Abtastvorrichtung besteht darin, daß die Genauigkeit und Zuverlässigkeit der Erntegut-Abtastung mittels Ultraschall stark von der Art und Beschaffenheit des Emtegutes und von Witterungsbedingungen abhängt.

Aufgabe der Erfindung ist es eine Vorrichtung an Landmaschinen zur berührungslosen Abtastung von sich über dem Boden erstreckenden Konturen zu schaffen, die die Nachteile der vorstehend beschriebenen Vorrichtung beseitigt.

Diese Aufgabe wird erfindungsgemäß durch die Merkmale des Patentanspruches 1 gelöst.

Erfindungsgemäß wird zur berührungslosen Abtastung von sich über dem Boden erstreckenden Konturen eine an sich bekannte Laser-Entfernungsmessvorrichtung bestehend aus einer Laserstrahisende/-empfangseinrichtung verwendet, die aus der Laufzeitmessung eines ausgesandten und an einem Konturpunkt reflektierten Laser-Abtaststrahles die Entfernung zu diesem bestimmt. Die Laser-Abtaststrahlen sind nun in einem bestimmten Winkelbereich schrittweise oder stufenlos in einer Abtaststrahlen-Ebene verschwenkbar. Dabei ist die Laser-Entfernungsmessvorrichtung so an der Landmaschine ausgerichtet angebracht ist, daß die Abtaststrahlen-Ebene in einem spitzen Winkel in Fahrtrichtung nach vom zum Boden geneigt ist. Anhand einer Auswerteeinrichtung wird zu jedem Schwenkwinkel aus der gemessenen Entfernung, der Anbringungshöhe der Laserentfernungsmeß-Vorrichtung (LM) an der Landmaschine und dem Neigungswinkel der Laserentfernungsmeß-Vorrichtung (LM) zum Boden die zu dem Schwenkwinkel korrespondierende Lage des Konturpunktes ermittelt.

Die erfindungsgemäße Verwendung und Anordnung einer derartigen Laserentfernungsmeß-Vorrichtung hat gegenüber der aus dem Stand der Technik bekannten Abtastvorrichtung mittels Ultraschallsensoren erhebliche Vorteile.

Für die erfindungsgemäße Abtastvorrichtung ist nur eine Laserstrahlsende/-empfangseinrichtung notwendig, dadurch ist diese Abtastvorrichtung an Landmaschinen im Vergleich zur bekannten Ultraschall-Abtastvorrichtung mit mehreren Ultraschallsensoren wesentlich kostengünstiger. Bei der erfindungsgemäßen Vorrichtung erfolgt die Abtastung einer Kontur vor der Landmaschine an verschiedenen Punkten quer zur Fahrrichtung durch das Verschwenken des Laser-Abtaststrahles. Die Zahl der Abtastpunkte auf einer Abtastlinie ist dabei wesentlich größer als bei der vorbekannten Ultraschall-Abtastvorrichtung. So ergibt sich beispielsweise bei einem Schwenkwinkelbereich von $\pm$ 45° und einer Ver-

schwenkung des Laser-Abtaststrahl in 0,5° Schritten eine Zahl von 180 Abtastpunkten. Aufgrund der geringen Divergenz des Laser-Abtaststrahles ist eine relativ hohe Auflösung (Dichte der Abtastpunkte) zu erzielen, da die Zentren benachbarter Abtastpunkte dicht beieinander liegen können, ohne daß die Abtastflecken auf der abzutastenden Kontur überlappen und eine eindeutige Zuordnung des Reflektionsortes nicht mehr möglich wäre.

Eine gegenseitige Beeinflussung benachbarter Sensoren wie bei der vorbekannten Abtastvorrichtung entfällt, da die Entfernungen zu den Konturpunkten nacheinander ermittelt werden.

Eine weit vorausschauende Abtastung, wie sie zum Beispiel für eine automatische Lenkung entlang einer abgetasteten Kontur notwendig ist, ist mit der erfindungsgemäßen Vorrichtung in einfacher Weise zu realisieren. So ist beispielsweise bei einer Anbringungshöhe über dem Boden von 380 cm an der Landmaschine und einem Neigungswinkel ($\varphi$) zum Boden von 65° ein Abtastabstand vor der Landmaschine von ca. 8,15m zu erzielen. Aufgrund der geringen Divergenz des Laser-Abtaststrahles kommt es bei diesem relativ großen Abtastabstand nicht zu einer nicht akzeptierbaren Vergrößerung des Abtastfleckes wie im Fall der Ultraschallsensoren. Eine derart weit vorausschauende Konturabtastung ist mit der vorbekannten Ultraschall-Abtastvorrichtung nicht zu realisieren. Dies würde ein entsprechend langes Haltegestänge vor der Landmaschine zur Aufnahme der Befestigungsleiste für die Ultraschallsensoren erfordern, wodurch das ganze System vollkommen unpraktikabel würde.

Die Reflexion des Laser-Abtaststrahles ist im Unterschied zu Ultraschall relativ unabhängig von der witterungsbedingten Beschaffenheit des abzutastenden Erntegutes, wodurch die Einsatzmöglichkeiten der Laser-Abtastvorrichtung erhöht werden.

In einer bevorzugten Ausführungsform wird der Laser-Abtaststrahl über einen drehbaren Spiegel oder über eine bewegbare Fokussiereinrichtung verschwenkt. Damit läßt sich eine relativ hohe Zahl von Abtastschwenkverläufen pro Sekunde und damit eine hohe Abtastfrequenz erzielen, was insbesondere bei höheren Fahrgeschwindigkeiten der Landmaschine wichtig ist. So ist beispielsweise bei Verwendung von Galvanometer-Motoren für die Drehung des Rotationsspiegels eine Verschwenkung im Millisekunden-Bereich möglich. Damit ist auch eine hohe Abtastpunktdichte in Fahrtrichtung der Landmaschine zu erzielen.

In einer alternativen Ausführungsform für die Verschwenkung des Laser-Abtaststrahles ist es vorgesehen, die Laserentfernungsmeß-Vorrichtung selbst zur Verschwenkung des Laser-Abtaststrahles zu verschwenken.

In einer Ausführungsform ist es vorgesehen, die Laserentfernungsmeß-Vorrichtung (LM) innerhalb der Fahrerkabine, hinter der Frontscheibe anzubringen. Staub auf der Scheibe kann aus den Signalen herausgefiltert werden und beeinträchtigt somit die Zuverlässigkeit der Abtastung nicht, die Scheibe selbst beeinträchtigt ebenfalls die Funktionstüchtigkeit nicht.

Die erfindungsgemäße Abtastvorrichtung ist aufgrund der hohen Genauigkeit, Zuverlässigkeit und aufgrund der einfachen Bauweise und Handhabung für die verschiedensten Anwendungen einsetzbar. Auf die verschieden Anwendungsverfahren der erfindungsgemäßen Vorrichtung beziehen sich die Verfahrensansprüche.

So ist es zum einen vorgesehen, während der Fahrt der Landmaschine fortlaufend entlang des zurückgelegten Weges, die Kontur über die Abtastbreite zu ermitteln und abzuspeichern. Hiermit kann die Kontur, von durch die Landmaschine aufzunehmenden Erntegutschwaden, sehr genau abgetastet und aufgezeichnet werden. An Hand der abgetasteten Kontur wird dann in einer Auswerteeinrichtung jeweils der Querschnitt des abgetasteten Erntegutschwades über der Bodengrundline ermittelt. Dabei kann der so bestimmte Schwadquerschnitt zur Einstellung der Fahrgeschwindigkeit der Landmaschine verwendet werden, wobei die Regelung beispielsweise auf konstante oder maximale Erntegutaufnahme eingestellt sein kann. Bei einem sich verkleinernden Schwadquerschnitt wird die Fahrgeschwindigkeit erhöht, so daß das pro Zeiteinheit aufgenommene Erntegut konstant ist. Wenn erntegutspezifische Dichteangaben vorliegen, so lassen sich diese ebenfalls mit dem ermittelten Schwadquerschnitt verknüpfen und in Verbindung mit einer ermittelten, überfahrenen Schwadstrecke, neben einer Volumenberechnung auch eine Gewichtsangabe, des während der Fahrt (online) aufgenommen Ernteguts, ermitteln. Darüber hinaus werden die so bestimmte schwadspezifischen Größen jeweils auch zur Einstellung von optimalen Arbeitsparametem der Erntemaschine verwendet.

In einer vorteilhaften Ausgestaltung der Erfindung, kann die innerhalb der Verschwenkzeit des Abtaststrahls ermittelte Vorfahrtstrecke der Landmaschine, mit in die Entfemungsmessung einbezogen werden.

In besonders vorteilhafter Weise wird zur Entlastung des Landmaschinenführers die abgetastete Schwadkontur, vorzugsweise die Schwadmitte, über bekannte Mittel während der Schwadaufnahme zur automatischen Lenkung der Landmaschine eingesetzt.

In Verbindung mit einem an der Landmaschine angeordneten Echtzeitortungssystem (Satellitennavigationssystem, GPS) ist es möglich, über die gesamte Einsatzfläche und/oder über Teilflächenbereiche hinweg die abgetasteten Konturen jeweils terrestrischen Koordinaten (geographische Länge und Breite, ggf. Höhe über NN - bzw. kartesische Koordinaten (x,y) bezogen auf einen Punkt des Feldes) zuzuordnen. Dabei werden neben den schwadspezifischen Größen auch die Abstände zwischen benachbarten Schwaden ermittelt und aus diesen Flächendaten und/oder Ertragsdaten generiert. Diese werden dann zur weiteren Verwendung gespeichert.

Unter Verwendung eines Sensors an der Landmaschine, der die Schieflagen der Landmaschine beispielsweise beim Einsatz am Hang, beim Fahren in Senken oder über Bodenwellen ermittelt, kann, in Verbindung mit einem an der Landmaschine angeordnetem GPS-Ortungssystem, durch die Abtastung der Bodenkontur, unter Berücksichtigung der Landmaschinen-Schieflagen und -Position, ein hochgenaues, dreidimensionales Geländemodell der landwirtschaftlichen Nutzfläche erstellt werden. Die Schieflagen der Erntemaschine können auch für eine einfache Korrektur der Abtastentfernung benutzt werden.

Eine weitere Einsatzmöglichkeit der Laser-Abtastvorrichtung ist die Ermittlung des Abstandes einer Getreideährenoberfläche zur Erntemaschine. Dieses Signal wird zur Regelung der Schneidwerks-/ bzw. Haspelhöhe verwendet, wodurch eine erhebliche Entlastung des Fahrers erreicht wird. In diesem Einsatzfall können die ermittelten Abtastentfernungen weiter für die Ermittlung der tatsächlichen Schneidwerksauslastung herangezogen werden. Dafür werden die Schneidwerksgrenzen jeweils einem Schwenkwinkel der Laser-Abtastvorrichtung zugeordnet. Findet in diesem Schwenkbereich ein Kontursprung statt, so liegt an dieser Stelle eine Gutkante vor. Zwischen dieser ermittelten Gutkante und der von diesem am weitesten wegliegenden Schneidwerksgrenze läßt sich dann die Auslastung ermitteln. Sollten durch Lagerstellen im Bestand mehrere Gutkantensprünge vorliegen, werden die jeweils äußeren Gutkantensprünge oder ein äußerer Gutkantensprung und eine der definierten Schneidwerksgrenze zur Schneidwerksauslastungsermittlung herangezogen. Dieser Auslastungswert kann dann über bekannte Mittel aufgezeichnet und/oder zur genaueren Flächenberechnung verwendet werden.

Eine weitere Einsatzmöglichkeit besteht in dem Abtasten von Fahrgassen, die durch vorhergehende Arbeitseinsätze (z.B. Saat und Ausbringen von Pflanzenschutzmitteln) in einem Erntegutbestand vorhanden sind, wobei anhand dieser abgetasteten Fahrgassen über bekannte Mittel eine automatische Lenkung der Erntemaschine durchgeführt wird.

Eine weitere vorteilhafte Verwendung der Laser-Abtastvorrichtung ist das Abtasten von Bearbeitungsspuren. Damit kann bei der Bearbeitung eine Zugmaschine über bekannte Mittel automatisch entlang einer abgetasteten Spur gelenkt werden. Besonders geeignet ist diese Vorrichtung zum Abtasten von Spuren/ bzw. Furchen, wie sie beim Flügen entstehen. Vorteilhaft erweist sich dabei insbesondere der weite Erfassungsbereich der Vorrichtung. Bei einer Bearbeitungsrichtungsumkehr muß die Laser-Abtastvorrichtung nicht mechanisch verschwenkt, sondern lediglich das Regelsignal mit einem veränderten Offset versehen der automatischen Lenkeinrichtung zugeführt werden. Hierzu können beispielsweise an einem Pflug vorhandene Sensoren die Stellung des Pflugrahmens ermitteln und der Auswerte-/ bzw. Lenkreglereinrichtung mitteilen. Der Offset kann weiter per Hand und/oder durch eine Schieflagenermittlung der Landmaschine beeinflußbar sein.

In einer weiteren Ausgestaltung kann die Laser-Abtastvorrichtung bei Landmaschinen, die eine sich anschließende Bearbeitungsspur nur in der zuvor gewählten, gleichen Bearbeitungsrichtung zulassen (z.B.: Beetflug. Mähwerke), die Laser-Abtastvorrichtung direkt über der Fahrspur bzw. Bearbeitungskante an dem Bearbeitungsgerät oder dem Zufahrzeug bzw. der Erntemaschine angebracht werden. Eine Umrechnung der ermittelten Spurposition oder ein Aufschalten eines Offsets kann dann entfallen.

Gestützt auf die Laser-Abtastvorrichtung sind außerdem Warnverfahren für den Betrieb der Landmaschine implementierbar. Durch die Vorgabe eines Schwellwert für die Höhenzunahme und/oder die absolute Höhe einer abgetasteten Kontur in Fahrtrichtung wird bei einer Überschreitung des Schwellwertes ein Warnsignal für den Bediener der Landmaschine erzeugt. Damit wird der Fahrer z.B.: eines Mähdreschers vor gefährlichen Bodenwellen oder Hindernissen gewarnt, die zu einer Beschädigung der Arbeitsgeräte führen könnten.

Generell können mit Hilfe der Laser-Abtastvorrichtung Hindernisse (z.B. Strommasten, Bäume, Steine etc.) auf dem Feld erkannt werden, die aufgrund ihrer vertikalen Erstreckung nicht innerhalb eines erlaubten Konturerwartungswerte-Bereiches liegen.

Anhand der beigefügten Zeichnungen soll die Erfindung näher veranschaulicht werden. Es zeigt:

Fig. 1 die Seitenansicht eines Feldhäckslers mit Laser-Abtastvorrichtung,
Fig. 2 die Draufsicht auf einen Feldhäcksler mit Laser-Abtastvorrichtung zur Schwadabtastung,
Fig. 3 die dreidimensionale Darstellung einer mit der erfindungsgemäßen Vorrichtung abgetasteten Schwadkontur entlang der Fahrstrecke,
Fig.4 den Querschnitt eines abgetasteten Schwadquerschnittes über einem geneigten Boden,
Fig. 5 die Draufsicht auf verschiedene Schwade auf einer Wiese,
Fig. 6 ein Blockschaltbild der Auswerteeinrichtung mit ihren Eingangssignalen,
Fig. 7 bis Fig. 10 die geometrischen Verhältnisse der Laserstrahl- Abtastung.

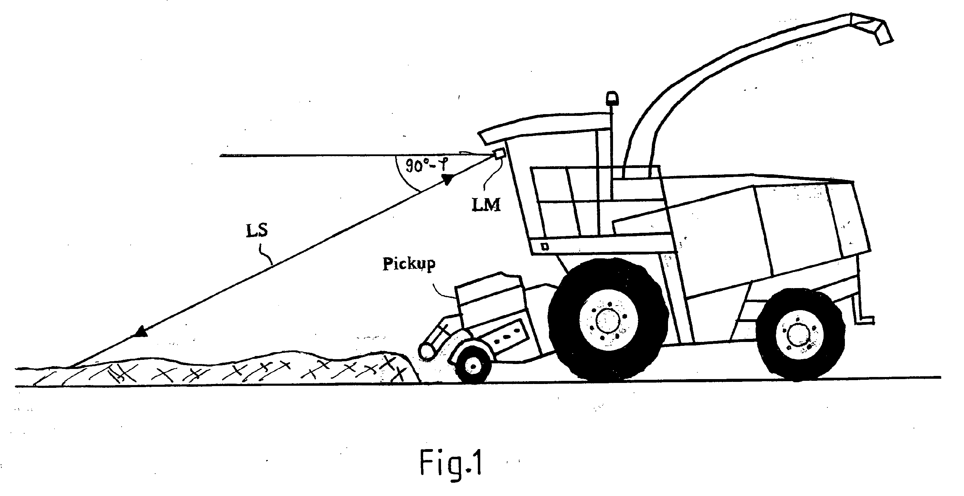

In Fig. 1 ist ein Feldhäcksler mit Pickup als Vorsatzgerät zur Aufnahme von im Schwad liegenden Erntegut gezeigt, an dem die Laserentfernungsmeß-Vorrichtung (LM) in Höhe der Fahrerkabine (ca. 3,80 m) unter einem Winkel von ca. 65° zum Boden geneigt angebracht ist (schematisch dargestellt). Damit ergibt sich ein Abtastabstand von ungefähr 8,15 m vor der Laserentfernungsmeß-Vorrichtung. Der Anbringungsort an der Landmaschine wird jeweils in Abhängigkeit von den baulichen Eigenarten der Landmaschine und den spezifischen Einsatzzwecken vorgegeben und solite zur optimalen Konturerkennung möglichst hoch gewählt werden. Um eine hohe Einstell-Flexibilität zu erreichen, wird die Laserentfernungsmeß-Vorrichtung (LM) vorzugsweise höhen- und neigungsverstellbar an der Landmaschine montiert.

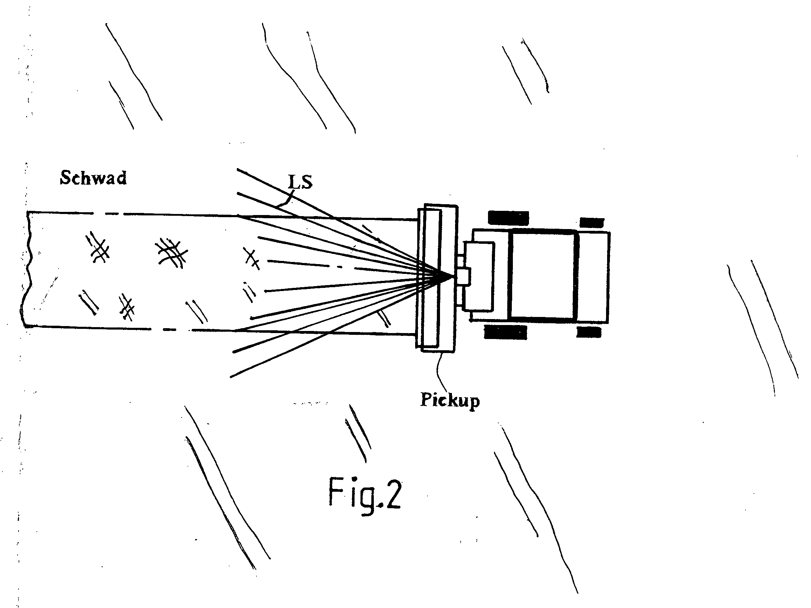

Zum besseren Verständnis ist in Fig. 2 eine Draufsicht auf den Feldhäcksler mit Pickup vor dem aufzunehmenden Schwad gezeigt. Die Laserentfernungsmeß-Vorrichtung (LM) befindet sich bezogen auf die Erstreckung des Feldhäckslers quer zur Fahrtrichtung in der Mitte der Maschine und tastet die Schwadkontur zu beiden Seiten der Landmaschinen-Längsrichtung symmetrisch ab.

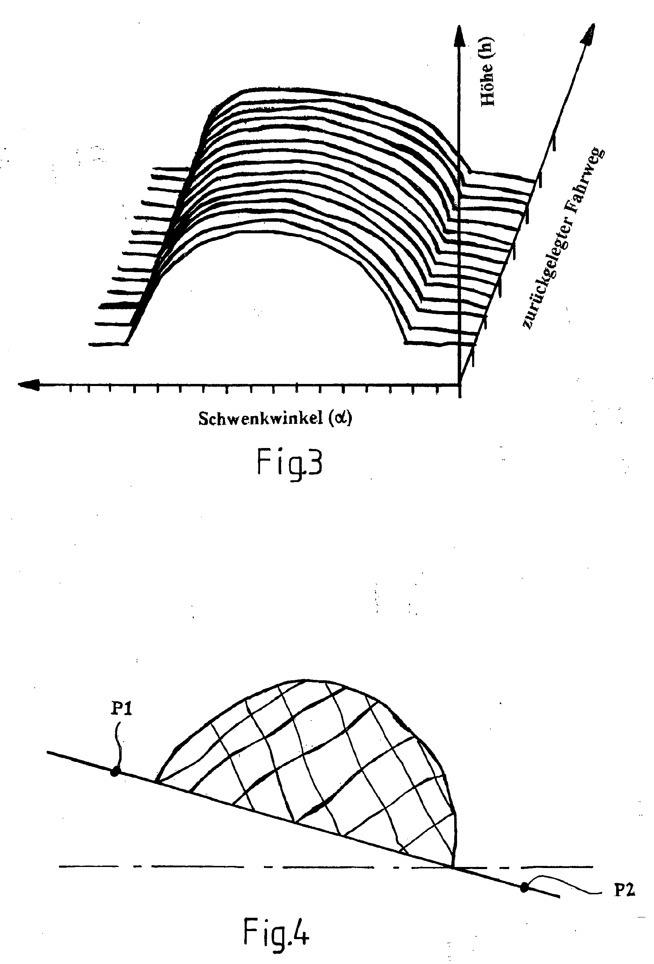

Fig. 3 zeigt schematisch eine dreidimensionale Darstellung der mit der Laserentfernungsmeß-Vorrichtung (LM) abgetasteten Schwadkontur entlang des zurückgelegten Fahrweges. Die Abstände der Konturlinien in Fahrtrichtung ergeben sich aus der Abtastfrequenz (Verschwenkzeit für den Laser-Abtaststrahl) und der Fahrgeschwindigkeit.

Fig. 4 zeigt eine abgetastete Schwadkontur über einer geneigten Bodengrundlinie (P1-P2). Unter Berücksichtigung des wahren, geneigten Verlaufes der Bodengrundlinie, die sich aus einer Interpolation der Bodenkonturen links und rechts neben dem Schwad ergibt, läßt sich gegenüber der Horizontalen eine genauere Berechnung des Schwadquerschnittes durchführen.

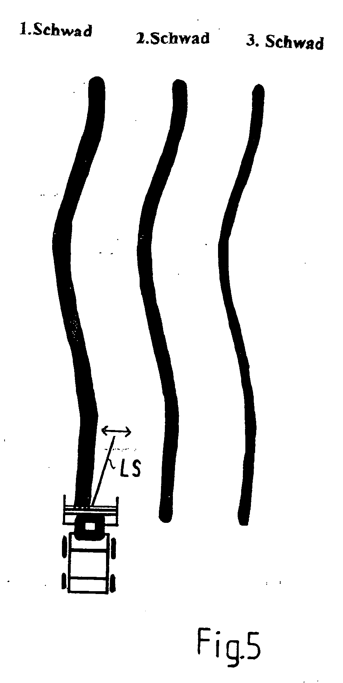

Fig. 5 zeigt eine Draufsicht auf einen Feldhäcksler bei der Aufnahme verschieden großer, benachbarter Erntegutschwaden.

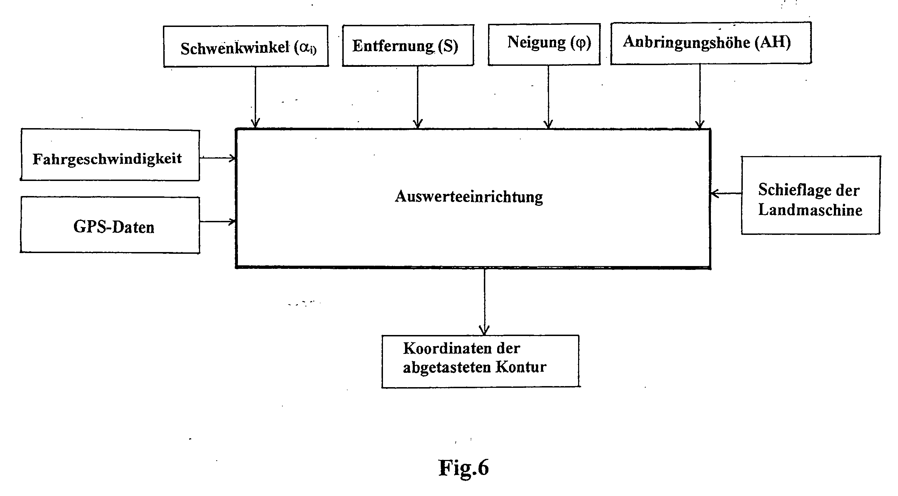

Fig. 6 zeigt ein Blockschaltbild der Auswerteeinrichtung zur Berechnung der abgetasteten Kontur-Koordinaten. Als Eingangssignale empfängt die Auswerteeinrichtung die gemessene Entfernung (S) zu dem jeweils abgetasteten Konturpunkt, den Schwenkwinkel ($\alpha$) unter dem dieser Konturpunkt abgetastet wurde, sowie die Neigung ($\varphi$) und die Anbringungshöhe (AH) der Laserentfernungsmeß-Vorrichtung (LM). Aus diesen Daten errechnet die Auswerteeinrichtung dann die Kontur-Koordinaten. In vorteilhaften Ausführungsformen empfängt die Auswerteeinrichtung weitere Eingangssignale wie die Fahrgeschwindigkeit, GPS-Daten oder Informationen über die Schieflage der Landmaschine. Die Auswerteeinrichtung kann in die Laserentfernungsmeß-Vorrichtung (LM) integriert sein oder aber als eine oder mehrere separate Komponenten ausgeführt sein. Vorzugsweise ist die Auswerteeinrichtung mit dem zentralen Steuerungs- bzw. Fahrzeugbussystem der Landmaschine verbunden.

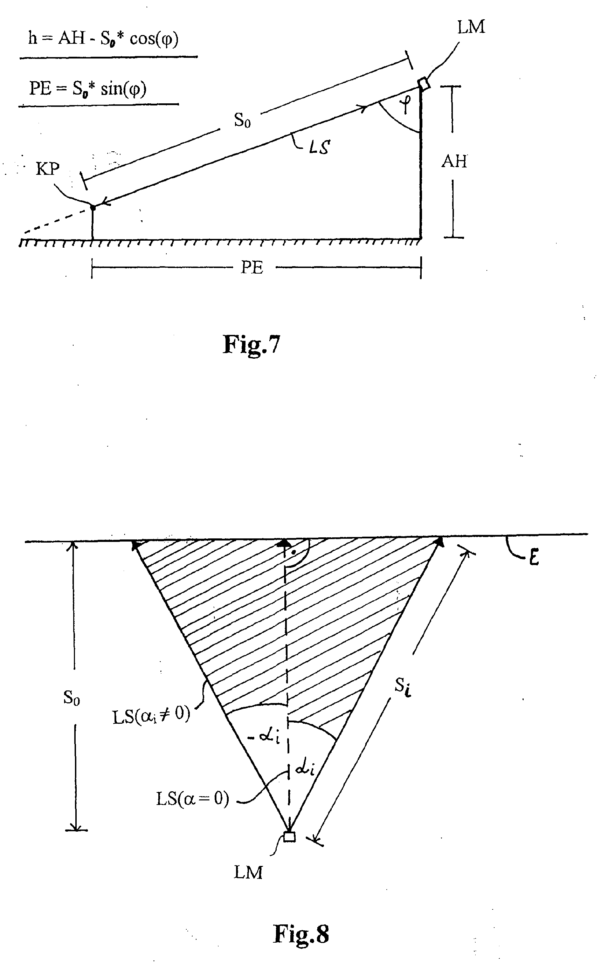

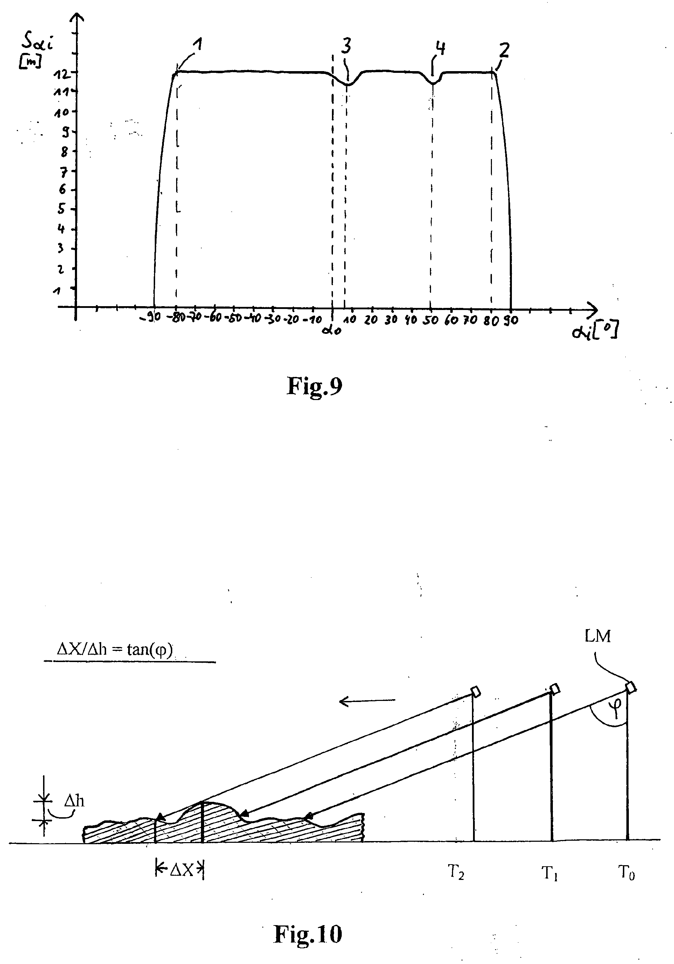

Zum besseren Verständnis zeigen die Figuren 7 und 10 die geometrischen Verhältnisse der laserstrahl-Abtastung.

Dabei bedeutet:

AH:  die Anbringungshöhe der Laserentfernungsmeß-Vorrichtung an der Landmaschine über dem Boden,

$\varphi$:  den Neigungswinkel der Abtaststrahlen-Ebene zur Vertikalen,

h:  die Höhe des abgetasteten Konturpunktes über dem Boden,

PE:  die projizierte Entfernung zwischen der Laserentfernungsmeß-Vorrichtung und dem abgetasteten Konturpunkt,

S:  die gemessene Entfernung zwischen der Laserentfernungsmeß-Vorrichtung und einem abgetasteten Knotenpunkt,

$\alpha_i$:  der i-te Schwenkwinkel des Laser-Abtaststrahles in der Abtaststrahlen-Ebene,

$S_0$:  die gemessene Entfernung für den Mittelpunktstrahl,

$S_i$:  die gemessene Entfernung für den um $\alpha_i$ verschwenkten Laser-Abtaststrahl,

In Fig. 7 sind die geometrischen Verhältnisse für den Mittelpunktstrahl ($\alpha$ = 0) dargestellt. Die Höhe des abgetasteten Konturpunktes (KP) bestimmt sich aus der gemessenen Entfernung ($S_0$), der Anbringungshöhe (AH) und dem Neigungswinkel ($\varphi$) zu: $h = AH - S_0 \, x \cos(\varphi)$. Die auf den Boden projizierte Entfernung (PE) zu dem abgetasteten Konturpunkt (KP) bestimmt sich zu: $PE = S_0 \, x \sin(\varphi)$.

Fig. 8 zeigt eine Draufsicht auf einen Konturverlauf (E). In diesem Verlauf sind keine Konturveränderungen enthalten. Die Entfernung (S) beschreibt hier den Abstand der Laserentfernungsmeß-Vorrichtung (LM), in Fahrtrichtung im ebenen Gelände, zum Boden.

Um Meßwerte für eine orthogonal zur Fahrtrichtung liegende Kontur (E) im Abstand ($S_0$), bei welcher der Mittelpunktsstrahl direkt zum Boden gemessen wird, zu erhalten, müssen die aus der Mittellage verschwenkten Abstandsmeßwerte LS($\alpha \neq 0$) umgerechnet werden. Die Umrechnungsformel lautet dafür: $S_{\varphi i} = S_i \, x \cos(\varphi_i)$.

Fig. 9 stellt ein Diagramm dar, in welchem Abstandswerte die wie nach Figur 8 korrigiert wurden, angezeigt werden. Der hier verwendete Abtaststrahl (LS) hat eine Reichweite von ca. 50m. An den Punkte (1) bzw. (2) wird die maximale Abtastweite überschritten und der Strahl wird nicht mehr reflektiert. Meßwerte außerhalb diesen Schwenkbereichs sind daher ungültig. Aus der Berechnung ergibt sich dann außerhalb des gültigen Bereichs jeweils ein Cosinusverlauf bis an den Abtastendanschlag.

An den Stellen (3) und (4) wurden jeweils eine kürzere Abtastweite des Abtaststrahls ermittelt. An diese Stellen liegen Erhöhungen in der Kontur vor. Sie zeigen jeweils die Lage und den Querschnitt eines Schwades an. Der Schwad an der Stelle (3) liegt etwas seitlich von der Mitte der Emternaschinenfahrtrichtung. Die Schwadmitte kann ermittelt und bezogen auf den Mittelpunktstrahl zur automatischen Lenkung einer Landmaschine verwendet werden.

An der Stelle (4) wird ein weiterer Schwad dargestellt. Über die jeweils ermittelten Winkellagen der beiden Schwadmittelpunkte, kann der Abstand der Schwaden ermittelt und in Verbindung mit den schwadspezifischen Größen (Länge, Querschnittsfläche, Dicht) einer Ernteflächenermittlung bzw. einer Ertragskartierung zugeführt werden.

In Fig. 10 ist ein Längsschnitt durch einen Schwadausschnitt gezeigt. Es werden drei hintereinander folgende Meßpunkte dargestellt. Dabei wird der zugehörige Schwenkwinkel $\alpha$ nicht berücksichtigt Aufgrund von Höhenunterschieden im Schwad ergeben sich Abschattungen des Laser-Abtaststrahles (LS). Mit folgendem Zusammenhang wird die maximal noch abtastbaren Änderung in der Konturhöhe ($\Delta h$) bei einem gewissen Abstand ($\Delta X$) der abgetasteten Konturpunkte in Fahrtrichtung beschrieben. Sie lautet: $\overline{\Delta h = \Delta X / \tan(\varphi)}$.

Ist beispielsweise durch eine Fahrgeschwindigkeit von v= 10km/h und einer Schwenkwinkelfrequenz 25Hz (Abtastfrequenz) ein Abtastabstand von $\Delta X$=11,1cm vorgegeben, so ergibt sich bei einem Neigungswinkel von $\varphi$=65° ein maximaler, abtastbarer Höhenunterschied von $\Delta h$=5,2cm. Ein derartiger Wert ist für die verfahrensgemäßen Anwendungen voll ausreichend.

**Patentansprüche**

1. Vorrichtung an Landmaschinen zur berührungslosen Abtastung von sich Ober dem Boden erstreckenden Konturen, **gekennzeichnet durch**,
   eine Laserentfernungsmeß-Vorrichtung (LM) bestehend aus einer an sich bekannten Laserstrahlsende/-empfangseinrichtung, die aus der Laufzeitmessung des ausgesandten und an einem Konturpunkt reflektierten Laser-Abtaststrahles (LS) die Entfernung zu diesem bestimmt,
   wobei

   - der Laser-Abtaststrahl (LS) in einem bestimmten Winkelbereich schrittweise oder stufenlos in einer Abtaststrahlen-Ebene verschwenkbar ist,
   - die Laserentfernungsmeß-Vorrichtung (LM) so an der Landmaschine ausgerichtet angebracht ist, daß die Abtaststrahlen-Ebene in einem spitzen Winkel ($\varphi$) in Fahrtrichtung nach vom zum Boden geneigt ist,
   - eine Auswerteeinrichtung vorgesehen ist, die zu jedem Schwenkwinkel ($\alpha$) aus der gemessenen Entfernung (S), der Anbringungshöhe der Laserentfernungsmeß-Vorrichtung (LM) an der Landmaschine und dem Neigungswinkel der Laserentfernungsmeß-Vorrichtung (LM) zum Boden die zu dem Schwenkwinkel korrespondierende Lage des Konturpunktes ermittelt.

2. Vorrichtung nach Anspruch 1,
   **dadurch gekennzeichnet, daß**
   der Laser-Abtaststrahl (LS) über einen drehbaren Spiegel oder einer bewegbaren Fokusiereinrichtung verschwenkbar ist.

3. Vorrichtung nach Anspruch 1,
   **dadurch gekennzeichnet, daß**
   die Laserentfernungsmeß-Vorrichtung (LM) selbst zur Verschwenkung des Laser-Abtaststrahles (LS) verschwenkt wird.

4. Vorrichtung nach einem der vorstehenden Ansprüchen,
   **dadurch gekennzeichnet, daß**
   die Laserentfernungsmeß-Vorrichtung. (LM) höhenverstellbar an der Landmaschine befestigt ist.

5. Vorrichtung nach einem der vorstehenden :Ansprüchen,
   **dadurch gekennzeichnet, daß**
   die Laserentfernungsmeß-Vorrichtung (LM) neigungsverstellbar an der Landmaschine befestigt ist, so daß unterschiedliche Neigungen des Laser-Abtaststrahles (LS) zum Boden einstellbar sind.

**6.** Vorrichtung nach einem der vorstehenden Ansprüchen,
**dadurch gekennzeichnet, daß**
die Auswerteeinrichtung der Laser-Abtastvorrichtung ein Signal von einem an der Landmaschine angebrachten Neigungssensor (Lotmeß-System, Kreiselsystem) zur Bestimmung der Schieflagen der Landmaschine empfängt und die jeweilige Schieflage bei der Konturbestimmung berücksichtigt.

**7.** Verfahren zur Konturabtastung mit einer Vorrichtung nach den Ansprüchen 1 bis 6,
**dadurch gekennzeichnet, daß**
während der Fahrt der Landmaschine fortlaufend aus den ermittelten Entfemungswerten die Kontur über die Abtastbreite ermittelt und gespeichert wird.

**8.** Verfahren nach Anspruch 7,
**dadurch gekennzeichnet, daß**
aus der Kontur und/oder aus der Summen von aneinanderfolgenden Konturen eine von der Landmaschine zu verfolgende Spur ermittelt wird.

**9.** Verfahren nach den Ansprüchen 7 und 8,
**dadurch gekennzeichnet, daß**
die ermittelte Spur über bekannte Mittel zur automatischen Lenkung einer Landmaschine entlang dieser Spur dient.

**10.** Verfahren nach den Ansprüchen 7 bis 9,
**dadurch gekennzeichnet, daß**
die Mitte der ermittelte Spur berechnet und für weitere Berechnungen verwendet wird.

**11.** Verfahren nach den Ansprüchen 7 bis 10,
**dadurch gekennzeichnet, daß**
das für die automatische Lenkung generierte Signal, durch einen Offset, der per Hand und/oder von den Schieflagen der Landmaschine und/oder durch eine Arbeitsrichtungserkennung beeinflußbar ist, so angepaßt wird, daß ein Parallelversatz zwischen der ermittelteten Spur und dem Mittelpunktstrahls möglich ist.

**12.** Verfahren nach den Ansprüchen 7 bis 11,
**dadurch gekennzeichnet, daß**
die ermittelte Spur ein Furche ist und Landmaschine Ober bekannte Mittel entlang der abgetasteten Furche gelenkt wird.

**13.** Verfahren den Ansprüchen 7 bis 11,
**dadurch gekennzeichneit, daß**
die ermittelte Spur ein Schwad ist und in einer Auswerteeinrichtung jeweils der Querschnitt des erkannten Emtegutschwades über der Bodengrundline ermittelt wird.

**14.** Verfahren nach Anspruch 13,
**dadurch gekennzeichnet, daß**
der Verlauf der Bodengrundlinie unter einem abgetasteten Emtegutschwad durch Abtasten der nicht mit Schwad bedeckten Bodengrundlinie zu beiden Seiten des Emtegutschwades ermittelt wird und zur genaueren Bestimmung des Schwadquerschnittes herangezogen wird.

**15.** Verfahren den Ansprüchen 13 bis 14,
**dadurch gekennzeichnet, daß**
der ermittelte Schwadquerschnitt in Verbindung mit der Abtastfrequenz der Laserentfernungsmeß-Vorrichtung und der Fahrgeschwindigkeit der Erntemaschine zur Schwadvolumenermittlung dient.

**16.** Verfahren nach den Ansprüchen 13 bis 15.
**dadurch gekennzeichnet, daß**
das ermittelte Schwadvolumen in Verbindung mit der Schwaddichteangabe zur Ertragsmengenmessung dient.

**17.** Verfahren nach den Ansprüchen 13 bis 16,
**dadurch gekennzeichnet, daß**
die Abstände zwischen den benachbarten Schwaden ermittelt und zur Ermittlung der Erntefläche dient.

**18.** Verfahren den Ansprüchen 13 und 17,
**dadurch gekennzeichnet, daß**
das mindestens eine der ermittelten Größen zur Anzeige gebracht und/oder zur Einstellung optimaler Arbeitsparameter der Landmaschine verwendet wird.

**19.** Verfahren nach den Ansprüchen 13 bis 18,
**dadurch gekennzeichnet, daß**
das mindestens eine ermittelte Größe zur Einstellung der Fahrgeschwindigkeit der Landmaschine verwendet wird.

**20.** Verfahren den Ansprüchen 7 bis 19,
**dadurch gekennzeichnet, daß**
über die gesamte Einsatzfläche oder über Teilflächenbereiche hinweg, mindestens eine aus der abgetasteten Konturen ermittelten Größe, durch ein an der Landmaschine angeordnetes Echtzeitortungssystem (Satellitennavigationssystem GPS) terrestrischen Koordinaten zugeordnet und zur weiteren Verwendung gespeichert wird.

**21.** Verfahren zur Konturabtastung mit einer Vorrichtung nach den Ansprüchen 1 bis 6,
**dadurch gekennzeichnet, daß**
die Bodenkontur einer landwirtschaftlichen Nutzfläche zur Erstellung eines hoch genauen dreidimensionalen Geländemodells abgetastet wird, wobei die jeweils abgetasteten Konturpunkte des Bodens über ein an der Landmaschine angeordnetes Echtzeitortungssystem (Satellitennavigationssystem GPS) unter Berücksichtigung mindestens einer Landmaschinen-Schieflage terrestrischen Koordinaten zugeordnet werden.

**22.** Verfahren zur Konturabtastung mit einer Vorrichtung nach den Ansprüchen 1 bis 6,
**dadurch gekennzeichnet, daß**
die Ährenoberfläche eines Getreidefeldes abgetastet wird und die ermittelte Kontur zur Regelung der Schneidwerkshöhe und/oder der Haspelhöhe und/oder der Ermittlung der Schneidwerksauslastung dient

**23.** Verfahren zur Konturabtastung mit einer Vorrichtung nach den Ansprüchen 1 bis 6,
**dadurch gekennzeichnet, daß**
Fahrgassen aufgrund vorhergehender Arbeitseinsätze in einem Erntegutbestand abgetastet werden und abgetastete Fahrgassen über bekannte Mittel der automatischen Lenkung einer Landmaschine dienen.

**24.** Verfahren zur Konturabtastung mit einer Vorrichtung nach den Ansprüchen 1 bis 6,
**dadurch gekennzeichnet, daß**
ein Schwellwert für die Höhenzunahme und/oder die absolute Höhe einer abgetasteten Kontur in Fahrtrichtung vor der Landmaschine definiert wird und bei einer Überschreitung des Schwellwertes ein Warnsignal für den Bediener der Landmaschine erzeugt wird.

**25.** Verfahren zur Konturabtastung mit einer Vorrichtung nach den Ansprüchen 1 bis 6,
**dadurch gekennzeichnet, daß**
die Vorrichtung zur Erkennung von Hindernissen (Strommasten, Bäume, Steine etc.) eingesetzt wird.

**26.** Verfahren zur Konturabtastung mit einer Vorrichtung nach den Ansprüchen 1 bis 6
**dadurch gekennzeichnet, daß**
die während der Verschwenkzeit des Abtaststrahls ermittelten Entfernung jeweils um das überfahrene Streckenstück korrigiert wird.

Fig.1

EP 1 630 573 A2

Schwad

LS

Pickup

Fig.2

Fig.3

Fig.4

1.Schwad    2.Schwad    3. Schwad

LS

Fig.5

| Schwenkwinkel ($\alpha_i$) | Entfernung (S) | Neigung ($\varphi$) | Anbringungshöhe (AH) |
|---|---|---|---|

| Fahrgeschwindigkeit | | |
|---|---|---|
| GPS-Daten | Auswerteeinrichtung | Schieflage der Landmaschine |

Koordinaten der abgetasteten Kontur

**Fig.6**

$$h = AH - S_0 * \cos(\varphi)$$

$$PE = S_0 * \sin(\varphi)$$

LM

$S_0$

LS

KP

$\varphi$

AH

PE

**Fig.7**

E

$S_0$

LS($\alpha_i \neq 0$)

$-\alpha_i$

$\alpha_i$

$S_i$

LS($\alpha = 0$)

LM

**Fig.8**

**Fig.9**

$$\Delta X/\Delta h = \tan(\varphi)$$

**Fig.10**